# EUROPÄISCHE PATENTSCHRIFT

(11) **EP 2 436 269 B1**
(45) Veröffentlichungstag und Bekanntmachung des Hinweises auf die Patenterteilung: **26.11.2014**
(21) Anmeldenummer: 10820887.7
(22) Anmeldetag: 23.06.2010
(51) Int. Cl.: A23F 5/00, A23F 5/10, A23F 5/24, A23F 5/40

(54) **KAFFEEZUSAMMENSETZUNG AUS LÖSLICHEM, GEFRIERGETROCKNETEM UND FEINGEMAHLENEM NATÜRLICHEM GERÖSTETEM KAFFEE MIT DEM GESCHMACK UND DEM AROMA VON FRISCH GERÖSTETEM NATÜRLICHEM KAFFEE SOWIE VERFAHREN ZUR HERSTELLUNG DIESER ZUSAMMENSETZUNG**
COFFEE COMPOSITION CONSISTING OF SOLUBLE, FREEZE-DRIED AND FINELY GROUND NATURAL ROASTED COFFEE WHICH HAS THE TASTE AND AROMA OF FRESHLY ROASTED NATURAL COFFEE, AND METHOD FOR PRODUCING SAID COMPOSITION
COMPOSITION DE CAFÉ CONSTITUÉE DE CAFÉ LYOPHILISÉ SOLUBLE ET DE CAFÉ NATUREL TORRÉFIÉ FINEMENT MOULU POSSÉDANT LE GOÛT ET L'ARÔME D'UN CAFÉ NATUREL FRAÎCHEMENT INFUSÉ ET PROCÉDÉ DE FABRICATION

(30) Priorität: 01.10.2009 RU 2009136251
(43) Veröffentlichungstag der Anmeldung: 04.04.2012
(73) Patentinhaber: Shakhin, Khikmat Vadi, Moskva 121433 (RU)
(72) Erfinder: Shakhin, Khikmat Vadi, Moskva 121433 (RU)
(74) Vertreter: Camenisch, Andrew Richard
(86) Internationale Anmeldenummer: PCT/RU2010/000349
(87) Internationale Veröffentlichungsnummer: WO 2011/040832

(56) Entgegenhaltungen:
- EP-A1- 0 928 561
- EP-A2- 0 220 889
- WO-A1-91/18517
- WO-A1-96/24255
- DE-A1- 2 846 515
- DE-A1- 19 700 084
- US-A- 3 697 288
- NAKHEMEDOV F. G.: 'Legkaya i pischevaya promyshlennost' TEKHNOLOGIYA KOFEPRODUKTOV, M. 1984, Seiten 78 - 83, XP008150539

## Beschreibung

### Technisches Gebiet

Die Erfindung betrifft die Nahrungsmittelindustrie und hier insbesondere eine Kaffee-Komposition bestehend aus löslichem, gefriergetrocknetem Kaffee und ein Herstellungsverfahren von löslichem Kaffee durch Gefriertrocknung (freeze-dried coffee).

### Stand der Technik

Löslicher Kaffee als Endprodukt muss einer Reihe häufig entgegengesetzter Anforderungen genügen: Er muss gelöst in der Tasse den Geschmack, das Aroma und die Vollmundigkeit von frisch zubereitetem, gemahlenem Röstkaffee haben. Dabei müssen die im echten Kaffee enthaltenen, für den Menschen nützlichen, organischen und anorganischen Stoffe (Tanine, Kohlenhydrate, Alkaloide, verschiedene Mineralstoffe - etwa einige Hundert organische Verbindungen), die das einzigartige Kaffeearoma ausmachen, erhalten bleiben. Da der lösliche Kaffee ein Produkt ist, das der Verbraucher mit dem dem echten Röstkaffee eigenen Geschmack und Aroma assoziiert, ist es zunehmend wichtig, dass das Kaffeearoma im löslichen Endprodukt erhalten bleibt.

Der weit verbreitete lösliche, gefriergetrocknete Kaffee bewahrt die Gebrauchseigenschaften, die in den echten Kaffee-Bohnen enthalten sind. Zur Verbesserung des Geschmacks und des Aromas in der Tasse müssen jedoch in einem bestimmten Stadium des Herstellungsprozesses die leichtflüchtigen Aroma-Anteile extrahiert und anschließend in einem weiteren Stadium des Prozesses in die Mischung zurückgeführt werden oder es müssen noch andere Verfahren zum Einsatz kommen, um dem löslichen Kaffee den Geschmack und das Aroma von echtem Kaffee zu verleihen [1-5].

Das bekannte herkömmliche Herstellungsverfahren von löslichem, gefriergetrocknetem Kaffee beinhaltet die Aufbereitung der Rohstoffe (Schälung und Sortierung der grünen Kaffeebohnen), die Mischung der Kaffeebohnen nach einer bestimmten Rezeptur (Mischung verschiedener Sorten grünen Kaffees im gewünschten Verhältnis), die Röstung, die Abkühlung, das Mahlen und die anschließende Extraktion der gewonnenen Mischung, ihre Konzentration, Filtration und Gefriertrocknung (Gefrieren, Granulierung des gefrorenen Extrakts, Gefriertrocknung des Extrakts) sowie das Abfüllen und Verpacken [6, 7].

Es ist möglich, den dargestellten Herstellungszyklus von gefriergetrocknetem Kaffee auch nur partiell zu nutzen. Dabei wird das für die Gefriertrocknung eingesetzte Substrat, das im Weiteren konzentrierter Flüssigextrakt heißt, in vorgefertiger Form verwendet, z. B. indem das Extrakt von anderen Unternehmen oder aus einem Langzeitlager bezogen wird.

Der Nachteil dieses Verfahrens besteht darin, dass die gewonnen gut löslichen Granulate nicht über ausreichend Geschmacks- und Aromaeigenschaften von echtem Kaffee verfügen, weil im Gesamtherstellungsprozess von gefriergetrocknetem Kaffee ein bedeutender Teil der das Aroma und den Geschmack bildenden Kaffeestoffe verloren geht.

Die Aufgabe, gefriergetrockneten Kaffee mit den organoleptischen Eigenschaften von echtem Röstkaffee zu gewinnen, kann nicht durch deren einfaches mechanisches Vermischen in der Tasse oder beim Abpacken des Endprodukts gelöst werden.

Das Kaffeeprodukt muss in der Verpackung homogen sein und der gelöste Kaffee ansprechend und appetitlich aussehen. Deshalb war es erforderlich, ein Verfahren zu entwickeln, bei dem die organoleptischen Eigenschaften von echtem, frisch zubereitetem Kaffee bei der Herstellung von gefriergetrocknetem Instant-Kaffee erhalten bleiben [5, 6, 7].

EP 0 928 561 offenbart eine Kaffee-Komposition, die Teilchen gemahlener Kaffeebohnen umfasst, wobei die Teilchen die folgende Größenverteilung aufweisen:

| | |
|---|---|
| Unter 16 Mikron | 50 - 70 Gew.% |
| 16-46 Mikron, | 30 - 50 Gew.% |
| 46-100 Mikron | Unter 10 Gew.% |

Die Kaffee-Komposition kann ferner lösliches Kaffeepulver umfassen. Vorzugsweise umfasst die Komposition 10-20% der Gewichtsanteile an gemahlenen Kaffeebohnen und 50 Gewichtsanteile an löslichem Kaffee.

WO 91/18517 offenbart ein pulverisiertes Lebensmittelprodukt auf der Basis eines löslichen Kaffeeextrakts, das sprühgetrocknet und gemahlen ist. Um dem Konsumenten ein ähnliches Empfinden wie bei herkömmlichem Kaffee zu vermitteln, werden dem gemahlenen, löslichen Extrakt 5 bis 10% fein gemahlener Röstkaffee zugesetzt. Ebenfalls zugesetzt werden 5 bis 10% eines fein gemahlenen Polysaccharids, wie etwa Maltodextrin. Die Bestandteile werden homogen gemischt und danach durch Befeuchtung agglomeriert und getrocknet.

US 3 697 288 offenbart das Mahlen von gemahlenen Kaffeemassen mittels Schwingungsenergie, um einen rückstandsfreien Zusatz für löslichen Kaffee bereitzustellen.

DE 28 46 515 offenbart ein Produkt aus löslichen Kaffeebohnen, das bis zu 20 Gew.% (vorzugsweise etwa 10 Gew.%) sehr fein gemahlenen (kleiner als durchschnittlich 50 Mikron) Röstkaffee enthält.

EP 0 220 889 offenbart, dass die Herstellung eines im Wesentlichen homogenen gefriergetrockneten Kaffeeprodukts erreicht wird, durch i) Vermischen eines Kaffee-Extrakts bei einer Temperatur im Bereich von 0° bis 20°C mit von 10 bis 60 Gew.-% an gerösteten und gemahlenen Kaffeeteilchen auf Basis des Gewichts der beiden Kaffee-Bestandteile, wobei die Teilchen eine solche Teilchengröße haben, daß 98 Gew.% des gemahlenen Kaffees ein 75 µm Sieb passieren; ii) Unterwerfen der Mischung aus Schritt (i) einer Homogenisierung; iii) Leiten der homogenisierten Mischung aus Schritt (ii) zu einem Mischtank und Zugeben von mindestens einem Äquivalenzgewicht an Kaffee-Extrakt bei einer Temperatur im Bereich von minus 5 bis 30°C und von 20 bis 40 Gew.% an gefrorenen Kaffee-Feinanteilen auf Basis des Gewichts des homogenisierten Extrakts und des Kaffee-Extrakts; iv) Einfrieren der Mischung aus Schritt (iii); v) Mahlen des gefrorenen Kaffeeprodukts; vi) Durchmustern des gemahlenen gefrorenen Kaffeeprodukts aus Schritt (v) und vii) Gefriertrocknen von gefrorenen Teilchen mit einer geeigneten Größe.

DE 197 00 084 offenbart ein Kaffeegetränk, das Instant-Kaffee mit beigemischtem Röstkaffee umfasst. Der Instant-Kaffee wird gesprüht und agglomeriert oder gefriergetrocknet. Der Röstkaffe wird während des Agglomerierens oder Eindickens zugegeben.

### Wesen der Erfindung

Aufgabe der Erfindung ist es, eine Kaffee-Komposition auf der Grundlage von löslichem, gefriergetrocknetem Kaffee mit den Geschmackseigenschaften und dem Aroma von echtem Röstkaffee zu entwickeln und ein Verfahren für deren Herstellung durch Zugabe von echtem Röstkaffeepulver zum konzentrierten flüssigen Kaffee-Extrakt, was nach der Gefriertrocknung zur Bildung strukturell homogener gefriergetrockneter Granulate mit einem gleichmäßigen Gehalt von echtem Röstkaffeepulver in den Granulaten führt, vorzuschlagen.

Diese Aufgabe wird durch die Kaffee-Komposition nach Anspruch 1 gelöst. Die Kaffee-Komposition enthält echtes Röstkaffeepulver, das innerhalb der strukturell homogenen, gefriergetrockneten Granulate gleichmäßig verteilt ist, wodurch bei Wasserzusatz zum Endprodukt die dem echten Röstkaffee eigenen Geschmackseigenschaften und das Aroma erhalten bleiben. Das Verfahren zur Herstellung der erfindunsgemäßen Kaffee-Komposition wird in Anspruch 3 beansprucht. Bei dem erfindungsgemäßen Verfahren zur Gewinnung von löslichem, gefriergetrockneten Kaffee, der den Geschmack und das Aroma von frisch zubereitetem echtem Kaffee hat, wird dem konzentrierten, flüssigen Kaffee-Extrakt vor dem der Gefriertrocknung vorangehenden Aufschäumen bei niedrigen Temperaturen echtes Röstkaffeepulver zugegeben, wobei die Feinvermahlung für einen gleichmäßigen Gehalt des Röstkaffepulvers innerhalb der Granulate des gefriergetrockneten Endprodukts sorgt und zu einer Extraktionsgeschwindigkeit der Aroma- und Geschmacksstoffe führt, die der Auflösungsgeschwindigkeit von gefriergetrocknetem Kaffee in der Tasse gleichkommt.

Im beanspruchten Verfahren wird das dem konzentrierten flüssigen Kaffee-Extrakt zugesetzte echte Röstkaffeepulver mit dem erforderlichen Röstgrad aus einer Art oder einer Mischung von grünen Bohnen im unterschiedlichen Verhältnis je nach gewünschten organoleptischen Eigenschaften des Fertigprodukts gewonnen. Dabei werden die grünen Bohnen getrennt für jede Bohnensorte oder als Mischung geröstet.

Die Menge des zuzusetzenden echten Röstkaffeepulvers wird ausgehend von 4-30 Gewichtsprozent an echtem Röstkaffeepulver in den Endgranulaten des gefriergetrockneten Kaffees berechnet. Die Untergrenze wird durch die relevante Mindestwirkung auf die Geschmackseigenschaften ermittelt, die Obergrenze durch den maximal zulässigen Bodensatz, der sich bei der Zugabe von Wasser zum Endprodukt absetzt. Dabei hat das echte Röstkaffeepulver eine maximale Körnung von 200 µm.

Die grünen Kaffee-Bohnen werden für das nachfolgende feine Vermahlen gereinigt und geröstet - es sind die gleichen Prozesse wie bei der Gewinnung von gefriergetrocknetem Kaffee - und dann einer speziellen Mühle zugeführt, die die Bohnen fein vermahlt. Anschließend wird das Röstkaffeepulver über Siebe geführt. Die Obergrenze für die Körnung liegt bei maximal 200 µm und wird durch die Extraktionsgeschwindigkeit ermittelt (d. h. die Auflösungsgeschwindigkeit der Aromastoffe), die bei Zugabe von heißem Wasser in die Tasse ungefähr 1-2 Minuten beträgt. Die Untergrenze liegt bei unter 65 µm und wird bestimmt durch die technischen Möglichkeiten der Mahlvorrichtung und durch das starke Erhitzen des zu zerkleinernden Pulvers beim Vermahlen, wodurch die leichtflüchtigen Stoffe, die die organoleptischen Eigenschaften von echtem Röstkaffee ausmachen, verloren gehen.

Dem konzentrierten flüssigen Kaffee-Extrakt kann echter Röstkaffee einer oder verschiedener Sorten (z. B. Sorte Arabica und/oder Robusta) in Form von fein gemahlenen Körnern zusammen mit unterschiedlichen unlöslichen Lebensmittelzusatzstoffen im erforderlichen Verhältnis, um dem gefriergetrockneten Kaffee zusätzliche Eigenschaften zu verleihen, und/oder Aromakonzentrat zugesetzt werden. Vor/beim Abpacken kann Kaffeebohnenöl den gefriergetrockneten Endgranulaten zugegeben werden.

Die Menge des zugesetzten echten Röstkaffeepulvers wurde ausgehend von einem Gehalt an 4 - 30 Gewichtsprozent in den Endgranulaten des gefriergetrockneten Kaffees berechnet. Die Röstung der grünen Kaffee-Bohnen erfolgt bei Temperaturen von über 200 °C und dauert bis zu 15 Minuten, je nach der erforderlichen Rösttiefe. Um die geforderte Vermahlung der Bohnen des echten Röstkaffees zu erreichen, werden Spezialmühlen eingesetzt.

Unmittelbar vor der Gefriertrocknung wird der konzentrierte flüssige Kaffee-Extrakt, der echtes Röstkaffeepulver enthält, mit einem Gemisch aus Stickstoff und Kohlendioxid aufgeschäumt und durchläuft alle normalen Stadien der Gefriertrocknung. Die entstehenden Granulate des gefriergetrockneten Kaffees, die im Innern echtes Röstkaffeepulver enthalten, können nun abgefüllt und verpackt werden.

Im Ergebnis des beschriebenen Prozesses ist das echte Röstkaffeepulver gleichmäßig in den Granulaten des gefriergetrockneten Kaffees verteilt, wobei damit im Endprodukt die Geschmacks- und Aromaeigenschaften von echtem Röstkaffee und die Homogenität der gefriergetrockneten Granulate erhalten geblieben sind.

### Ausführungsbeispiel

Als Rohstoff für die Gewinnung von gefriergetrocknetem Kaffee wurde konzentrierter Flüssigextrakt verwendet, der aus einer Mischung der Kaffeesorte Arabica (50 % kenianische, 20 % kolumbische, 30 guatemaltekische) gewonnen wurde, der echtes Röstkaffeepulver der Sorte Arabica aus Kolumbien mit einem Gehalt von 5 % in den gefriergetrockneten Endgranulaten zugesetzt wurde. Seine Röstung und anschließende Herunterkühlung erfolgten nach einem allgemein bekannten Verfahren. Nach der Feinvermahlung in einer Spezialmühle wurden die Körnergrößen 65-80 µm ausgesondert, wodurch die Extraktion bei Zusatz von heißem Wasser in der Tasse in 30 Sekunden erfolgt, was zeitlich mit der vollständigen Auflösung des gefriergetrockneten Kaffees zusammenfällt und den Effekt erzeugt, dass man echten, frisch gebrühten Kaffee trinkt, der aber nicht gekocht zu werden braucht. Dabei wird ein gleichmäßiger Gehalt an echtem Röstkaffeepulver in den gefriergetrockneten Kaffeegranulaten gewährleistet.

Der konzentrierte flüssige Kaffee-Extrakt, der echtes Röstkaffeepulver enthält, wurde mit einem Stickstoff-Kohlendioxid-Gemisch aufgeschäumt, der Schaum entnommen und seine Gefriertrocknung und Granulation auf herkömmliche Weise vorgenommen.

Das Ergebnis war die folgende Kaffeekomposition: Gefriergetrocknete Kaffeegranulate, fertig zum Abfüllen und Verpacken, die im Innern echtes Röstkaffeepulver enthalten und das vollmundige Aroma eines frisch zubereiteten echten Kaffees besitzen. Die gefriergetrockneten Granulate haben eine hell- bis dunkelbraune Farbe. Dabei löst sich der auf diese Weise gewonnene Kaffee in 96 °C-heißem Wasser in maximal 30 Sekunden auf, was für löslichen Kaffee typisch ist, dabei setzt sich jedoch praktisch kein Grund wie bei frisch zubereitetem echtem Röstkaffee ab.

### zitierter Stand der Technik

1. Patent RU2192141C2, veröffentlicht am 10.11.2002, Societe de Produits Nestle S.A., Aromatisierung von Getränkepulver.
2. Sivetz M., Desrisier N. W., Coffee Technology, AVI Publishing Company Inc, Westport, Connecticut, 1979, S. 459-460.
3. Anmeldung RU2003122213, veröffentlicht am 20.02.2005, Kraft Foods Holding, Inc (US) Komposition eines Kaffeearomas, aromatische Komposition für die Zubereitung eines Kaffeegetränks sowie Komposition eines löslichen Kaffees.
4. Anmeldung RU2002107325, veröffentlicht am 10.02.2005, Société de Produits Nestle S.A., Extraktionsverfahren von Aroma-Komponenten des Kaffees und aromatisiertes lösliches Kaffeepulver, das Aroma-Komponenten enthält.
5. Anmeldung RU2003131184, veröffentlicht am 20.01.2005, Société de Produits Nestle S.A., Aromahaltige Komponenten des Kaffees und ihr Herstellungsverfahren.
6. F. G. Nachmedov. Technologie der Kaffeeproduktion. - M: Leicht- und Nahrungsmittelindustrie, 1984, S. 79.
7. Anmeldung KR 20040082227 A, veröffentlicht am 24.09.2004, Production of instant coffee product containing aroma extract while having palatability and flavour similar to green coffee beans.

## Patentansprüche

1. Kaffeekomposition, die folgendes umfasst: löslichen, gefriergetrockneten Kaffee und echtes Röstkaffeepulver mit dem Geschmack und dem Aroma von frisch zubereitetem echtem Kaffee, in der das echte Röstkaffeepulver, dessen Gehalt 4 bis 30 Gew.% beträgt und das eine Körnung von 65 µm bis 200 µm aufweist, innerhalb der strukturell homogenen, aufgeschäumten, gefriergetrockneten Granulate von hell- bis dunkelbrauner Farbe gleichmäßig verteilt ist, die durch Aufschäumen des konzentrierten flüssigen Kaffee-Extrakts und des echten Röstkaffees erzeugt werden, und bei der die Auflösungsgeschwindigkeit des gefriergetrockneten Kaffees und die Extraktion der Aroma- und Geschmacksstoffe der Ingredenzien des enthaltenen echten Röstkaffeepulvers in der Komposition bei Zusatz von 96°C-heißem Wasser übereinstimmen.

2. Kaffeekomposition nach Anspruch 1, **dadurch gekennzeichnet, dass** die Kaffeekomposition Kaffeebohnenöl enthält.

3. Verfahren zur Herstellung einer Kaffeekomposition auf der Grundlage von löslichem, gefriergetrocknetem Kaffee, die den Geschmack und das Aroma von frisch gebrühtem echtem Kaffee besitzt, in dem zum konzentrierten, flüssigen Kaffee-Extrakt vor dem der Gefriertrocknung vorangehenden Aufschäumen echtes Röstkaffeepulver mit einer Körnung von 65 µm bis 200 µm zugesetzt wird, wobei die Feinvermahlung einen gleichmäßigen Gehalt des Röstkaffeepulvers innerhalb der gefriergetrockneten Granulate gewährleistet, und wobei die Extraktionsgeschwindigkeit der Aroma- und Geschmacksstoffe des enthaltenen echten Röstkaffeepulvers und die Lösungsgeschwindigkeit von gefriergetrocknetem Kaffee in der Tasse bei Zusatz von Wasser mit einer Temperatur von 96°C übereinstimmen.

4. Verfahren nach Anspruch 3, **dadurch gekennzeichnet, dass**
das dem konzentrierten flüssigen Kaffee-Extrakt zuzusetzende echte Röstkaffeepulver aus einer Sorte oder einer Mischung grüner Kaffeebohnen besteht.

5. Verfahren nach Anspruch 3, **dadurch gekennzeichnet, dass**
eine getrennte Röstung jeder Sorte grüner Kaffeebohnen bzw. eine gleichzeitige Röstung in der Mischung erfolgt.

6. Verfahren nach Anspruch 3, **dadurch gekennzeichnet, dass**
dem konzentrierten flüssigen Kaffee-Extrakt echtes Röstkaffeepulver zusammen mit unlöslichen Lebensmittelzusatzstoffen und/oder ein Aromakonzentrat zugesetzt werden.

7. Verfahren nach Anspruch 3, **dadurch gekennzeichnet, dass**
bei/vor dem Abpacken dem Endprodukt Kaffeebohnenöl zugesetzt wird.

## Claims

1. Coffee composition, comprising: soluble, freeze-dried coffee and real roasted coffee powder with the flavour and the aroma of fresh-brewed real coffee, in which the real roasted coffee powder, whose content is 4 to 30 wt% and which has a grain size of 65 microns to 200 microns, is distributed evenly within the structurally homogeneous, foamed, freeze-dried granules, of light to dark brown in colour, which are produced by foaming of the concentrated liquid coffee extract and the real roasted coffee, and in which the dissolution rate of the freeze-dried coffee and the extraction of the aromas and flavours match the ingredients of the real roasted coffee powder contained in the composition with the addition of 96 °C hot water.

2. Coffee composition according to claim 1, **characterised in that** the coffee composition comprises coffee bean oil.

3. A process for preparing a coffee composition on the basis of soluble, freeze-dried coffee that has the taste and aroma of freshly brewed real coffee in which the concentrated liquid coffee extract prior to the foaming preceding freeze-drying is supplemented with real roasted coffee powder with a grain size of 65 microns to 200 microns, whereby fine grinding ensures a uniform content of roasted coffee powder within the freeze-dried granules and the rate of extraction of the aromas and flavours of the real roasted coffee powder and the dissolution rate of the freeze-dried coffee in the cup coincide with the addition of water at a temperature of 96 °C.

4. A method according to claim 3, **characterised in that** the real roasted coffee powder added to the concentrated liquid coffee extract comes from a variety or a blend of green coffee beans.

5. A method according to claim 3, **characterised in that** there is separate roasting of any sort of green coffee beans or simultaneous roasting in the mix.

6. A method according to claim 3, **characterised in that** the concentrated liquid coffee extract may be supplemented with real roasted coffee powder together with insoluble food additives and/or an aroma concentrate.

7. A method according to claim 3, **characterised in that** in/before packaging coffee bean oil is added to the end product.

## Revendications

1. Composition de café, comprenant les ingrédients suivants : café lyophilisé soluble et véritable poudre de café torréfié ayant le goût et l'arôme de véritable café venant d'être préparé, dans laquelle la véritable poudre de café torréfié, dont la teneur s'élève à 4 à 30 % en poids et qui présente une granulométrie de 65 µm à 200 µm, est répartie de manière homogène dans les granulés lyophilisés mousseux à structure homogène de couleur brun clair à foncé qui sont obtenus en faisant mousser l'extrait de café liquide concentré et le véritable café torréfié et dans laquelle la vitesse de dissolution du café lyophilisé et l'extraction des substances aromatiques et gustatives des ingrédients de la véritable poudre de café torréfié concordent dans la composition en cas d'ajout d'eau chauffée à 96 °C.

2. Composition de café selon la revendication 1, **caractérisée en ce que** la composition de café contient de l'huile de grains de café.

3. Procédé de fabrication d'une composition de café à partir de café lyophilisé liquide, qui a le goût et l'arôme de véritable café venant d'être préparé, dans laquelle de la véritable poudre de café torréfié ayant une granulométrie de 65 µm à 200 µm est ajoutée avant le moussage précédant la lyophilisation, dans laquelle la mouture fine garantit une teneur homogène de la poudre de café torréfié dans les granulés lyophilisés et la vitesse d'extraction des substances aromatiques et gustatives de la véritable poudre de café torréfié contenue et la vitesse de dissolution du café lyophilisé dans la tasse concordent en cas d'ajout d'eau chauffée à une température de 96°C.

4. Procédé selon la revendication 3, **caractérisé en ce que** la véritable poudre de café torréfié à ajouter à l'extrait de café liquide concentré est composée d'une variété ou d'un mélange de grains de café verts.

5. Procédé selon la revendication 3, **caractérisé en ce**
**qu'**il y a une torréfaction séparée de chaque variété de grains de café verts ou une torréfaction simultanée en mélange.

6. Procédé selon la revendication 3, **caractérisé en ce**
**qu'**on ajoute à l'extrait de café liquide concentré de la véritable poudre de café torréfié en même temps que des additifs alimentaires insolubles et/ou qu'un concentré aromatique.

7. Procédé selon la revendication 3, **caractérisé en ce que**
de l'huile de grains de café est ajoutée au produit final lors de son emballage ou avant.
